(19) Europäisches Patentamt
European Patent Office
Office européen des brevets

(11) **EP 1 989 582 B1**

(12) **FASCICULE DE BREVET EUROPEEN**

(45) Date de publication et mention de la délivrance du brevet:
**02.01.2019 Bulletin 2019/01**

(21) Numéro de dépôt: **06842263.3**

(22) Date de dépôt: **27.11.2006**

(51) Int Cl.:
*H04N 5/232* *(2006.01)*  *H04N 5/225* *(2006.01)*
*H04N 17/00* *(2006.01)*  *G02B 13/06* *(2006.01)*
*G02B 27/32* *(2006.01)*  *G03B 37/00* *(2006.01)*

(86) Numéro de dépôt international:
**PCT/IB2006/003738**

(87) Numéro de publication internationale:
**WO 2007/110697 (04.10.2007 Gazette 2007/40)**

(54) **PROCEDE ET DISPOSITIF D'IDENTIFICATION ET DE CALIBRATION DE SYSTEMES OPTIQUES PANORAMIQUES**

VERFAHREN UND EINRICHTUNG ZUM IDENTIFIZIEREN UND KALIBRIEREN PANORAMISCHER OPTISCHER SYSTEME

METHOD AND DEVICE FOR IDENTIFYING AND CALIBRATING PANORAMIC OPTICAL SYSTEMS

(84) Etats contractants désignés:
**DE FR GB**

(30) Priorité: **09.12.2005 FR 0512499**

(43) Date de publication de la demande:
**12.11.2008 Bulletin 2008/46**

(73) Titulaire: **6115187 Canada Inc.**
**Montreal, QC H3A 2A5 (CA)**

(72) Inventeurs:
• **ARTONNE, Jean-Claude**
**Montreal, Quebec H2Y 3T5 (CA)**
• **VILLEGAS, Mathieu**
**Montreal, Quebec H2S 2N7 (CA)**
• **KONEN, Pierre**
**Montreal, Quebec H2K 457 (CA)**
• **THIBAULT, Simon**
**Quebec, Quebec G2G 2V7 (CA)**

(74) Mandataire: **Marchand, André**
**OMNIPAT**
**24 Place des Martyrs de la Résistance**
**13100 Aix-en-Provence (FR)**

(56) Documents cités:
**EP-A- 0 720 125    EP-A- 1 416 725**
**EP-A1- 0 635 966    FR-A1- 2 863 719**
**US-A- 5 969 845**

**Description**

La présente invention concerne la photographie et la vidéo et notamment l'imagerie panoramiques.
Dans la description qui suit, on entend par :

1. Optique panoramique : un système optique qui peut être dioptrique et/ou catadioptrique (associant ou non des lentilles et des miroirs) présentant généralement un champ de vision de plus de 120 degrés. Les optiques panoramiques se répartissent elles-mêmes en deux groupes principaux définis ci-après.

1.1. Optique à très grand angle : un système optique dioptrique composé généralement de plusieurs lentilles dont le champ de vision (FOV - Field Of View) est supérieur à 120 degrés. Ce groupe se subdivise en deux types de systèmes optiques définis ci-après.

1.1.1. Optique fish-eye : une optique à très grand angle (en général supérieur à 160 degrés) et à symétrie axiale, dont la fonction de répartition angulaire tend à être idéalement constante.
1.1.2. Optique panomorphe : une optique à très grand angle pouvant présenter des dissymétries importantes et variées (anamorphoses) ou des fonctions de répartition angulaire variables, ou bien encore les deux combinées dans le but d'augmenter la résolution de zones d'intérêt et d'optimiser la surface couverte par l'image résultante sur le capteur.

1.2. Optique catadioptrique : un système composé d'un ou plusieurs miroirs de formes variées, intégrés ou non à l'intérieur de dioptres, et associés ou non avec des groupes de lentilles additionnels, offrant un angle de vue supérieur à 120 degrés.

2. Système de vision panoramique : un ensemble composé d'un système optique panoramique, d'un système de transmission d'images et d'un système de traitement numérique permettant de rétablir les perspectives en corrigeant les distorsions engendrées par l'optique panoramique.
3. Zone de projection panoramique : la zone du capteur (ou de l'image) sur laquelle est projetée l'environnement photographié ou filmé.
4. Zone de projection adjacente : la surface du capteur non utilisée qui se situe autour (dans le cas général des optiques panoramiques), et/ou au centre (dans le cas particulier d'optiques catadioptriques) de la zone de projection panoramique.

Depuis la fin des années 1990, un certain nombre de technologies dites «immersives» tentent de pénétrer sur les marchés de la vidéoconférence et de la vidéosurveillance. Le principal avantage offert par un dispositif à vision panoramique ou immersive, ou encore à 360°, réside dans la possibilité pour plusieurs utilisateurs de voir dans plusieurs directions en même temps avec une seule caméra.
Néanmoins, malgré cet avantage évident, la pénétration de ce type de technologie reste marginale depuis les 15 dernières années.
Cette difficulté commerciale résulte de plusieurs raisons techniques dont principalement le manque de résolution graphique des systèmes vidéo panoramiques (résolu en partie aujourd'hui par l'utilisation de capteurs à haute résolution et/ou par l'utilisation d'optiques panomorphes). Par ailleurs, la complexité des procédures d'intégration des technologies immersives dans les infrastructures et systèmes existants se révèle être un problème majeur.
Cette complexité est principalement due au fait que les caméras panoramiques (systèmes de vision panoramiques) doivent être calibrées une par une, par le biais de procédures qui sont généralement en grande partie manuelles. Elles nécessitent donc de recourir à une main d'oeuvre qualifiée et formée à cette tâche.
En effet, une optique panoramique projette un environnement spatial plus ou moins hémisphérique sur un capteur plat (plan image) avec de très fortes distorsions. Il est donc nécessaire d'en connaître toutes les caractéristiques (calibration) afin de reformer et corriger les perspectives d'une portion d'image en supprimant les distorsions, et simuler ainsi une caméra motorisée. Les quatre principaux paramètres de calibration d'une optique panoramique sont les suivants :

1. le type de distorsion de l'optique panoramique (fonction de répartition des pixels dans l'espace) et par extension la forme de l'image sur le capteur (zone de projection panoramique),
2. l'angle de vue total de l'optique panoramique,
3. la position et l'orientation (dans le cas d'une optique panomorphe) de l'image sur le capteur, et
4. la taille de l'image sur le capteur.

Si l'on ne dispose d'aucune autre information que l'image projetée, il n'est pas trivial de déterminer toutes ces caractéristiques. De plus, les algorithmes de détection ou de calibration automatique peuvent fréquemment générer des erreurs.

Pour palier à ces difficultés, la plupart des technologies immersives commercialisées à ce jour sont des solutions propriétaires qui présentent sensiblement les mêmes fonctions de répartition angulaire et les mêmes angles de vue. Il est donc ainsi plus aisé, si l'on ne cherche pas à avoir une compatibilité avec des systèmes concurrents, de définir dans les logiciels des valeurs par défaut des deux premiers paramètres présentés précédemment.

En revanche, les deux derniers paramètres dépendent du positionnement du capteur d'image par rapport à l'objectif. Ils peuvent donc varier d'une manière importante d'une caméra à l'autre, même si celles-ci sont constituées des mêmes composants.

Les fabricants de systèmes panoramiques ont donc imaginé des procédés de calibration principalement manuels ou semi-automatiques, et malgré un taux d'erreur important, parfois automatiques. Les procédés automatiques et semi-automatiques permettent de générer des données de calibration et d'identification qui doivent être associées à chaque caméra et partagées avec chaque système de traitement ou de visualisation d'images panoramiques. L'inconvénient principal de cette méthode réside dans la nécessité de faire intervenir un technicien formé à cet effet.

C'est pourquoi les constructeurs de systèmes de vision panoramique ont généralement choisi de commercialiser des technologies intégrées, comprenant non pas des optiques panoramiques seules, mais plutôt des systèmes de vision panoramique propriétaires complets (optique, caméra et logiciel). La calibration peut ainsi s'effectuer manuellement à l'atelier. Cette solution tend augmenter à la source les coûts des systèmes de vision panoramique. En outre, cette solution ne permet pas d'améliorer les parcs de caméras existants, ce qui pourtant représente la plus grande part de marché.

La présente invention vise à permettre le déploiement et la mise en oeuvre efficace de systèmes de vision panoramique sur un parc de caméras beaucoup plus important, sans avoir besoin de recourir à des interventions humaines coûteuses, ni même de référencer systématiquement chaque caméra.

En particulier, l'invention vise à permettre la détermination automatique des quatre paramètres présentés précédemment, par un traitement numérique entièrement automatisé ou semi-automatique, applicable aux optiques à très grand angle.

Une idée de l'invention est de prévoir un marquage dans la caméra, permettant à la fois d'identifier et de calibrer l'optique.

Dans l'art antérieur, il n'est pas prévu de caractériser une optique à très grand angle ou à angle de vue plus restreint, par projection d'informations quelconques sur le capteur d'image, sans que ces informations soient présentes dans le champ de vue de l'optique. En général, le dispositif de projection d'informations est totalement extérieur au système optique, même s'il est intégré à un système de support ou connexe. Ainsi le document EP 0 635 966 décrit un scanner comprenant un système optique constitué d'un capteur d'image et d'un objectif comprenant trois lentilles de résolution différentes montées sur un support en rotation permettant de mettre une des trois lentilles dans l'axe optique du scanner. Une marque de référence illuminée par la lampe du scanner, et se situant sur le chemin optique de l'objectif permet l'identification du type de lentille à partir de l'image de la marque de référence capturée par le capteur d'image. La lampe du scanner et la marque de référence forment un dispositif de marquage extérieur à l'objectif.

Par ailleurs, il est courant de caractériser une scène, mais pas une optique. Par exemple, la demande de brevet US20050183273 décrit un dispositif qui projette dans une scène et non pas sur le capteur, des marquages tels que logos, marques de référence, etc. Ces marquages présentent des utilités variées, telles que la réalisation de mesures, le marquage de limites de terrains de sport, ou bien encore la projection de simples messages.

Dans la demande de brevet US20030147594, il est prévu d'appliquer des marquages directement sur les composants optiques dans le but de les orienter correctement lors de l'assemblage du système optique complet. Ces marquages permettent éventuellement d'identifier un composant, mais en aucun cas le système au complet, et ne créent aucune information additionnelle sur le capteur de nature à caractériser le système optique complet.

L'apposition d'informations directement dans l'électronique du capteur est envisagée dans la demande de brevet US20040247120. Cette demande décrit un dispositif qui ajoute numériquement aux images des informations visibles ou bien cryptées de façon à ne pas altérer la perception de l'image pour l'observateur humain (communément appelée en jargon technique "Watermark"). Ces dispositifs permettent, entre autre d'apporter une protection contre les copies en introduisant une signature dans les images.

Enfin, il existe un certain nombre de procédés et de dispositifs qui, comme celui décrit dans la demande de brevet US20040144845, permettent d'apposer des marques très spécifiques directement sur les objets, qui ne peuvent être lues qu'avec des dispositifs spécialement calibrés à cet effet.

L'invention vise un procédé et un dispositif pouvant permettre d'identifier et de calibrer des systèmes optiques panoramiques.

Cet objectif est atteint par la prévision d'un système optique selon la revendication 1.

Selon un mode de réalisation de l'invention, le dispositif de marquage projette au moins une marque sur le capteur d'image, en dehors de la zone projection de l'image de la scène sur le capteur d'image.

Selon un mode de réalisation de l'invention, le dispositif de marquage comprend une source de lumière émettant de la lumière qui est transmise ou réfléchie par au moins une des marques, dans le spectre visible et/ou non visible, vers le capteur d'image.

Selon un mode de réalisation de l'invention, la surface non utile de la lentille est une face latérale de la lentille frontale (1), la face latérale pouvant être dépolie.

Selon un mode de réalisation de l'invention, le dispositif de marquage comprend une source de lumière, et un masque formant au moins une marque, par lequel des rayons lumineux produits par la source de lumière sont introduits dans le système optique et atteignent le capteur d'image, et entre la source de lumière et le masque, éventuellement un diffuseur et/ou un guide de lumière et/ou une surface réfléchissante pour rediriger la lumière provenant de la source de lumière vers le masque.

Selon un mode de réalisation de l'invention, le dispositif de marquage comprend une surface réfléchissante et/ou un élément diffractif, et/ou un élément optique de puissance positive tel qu'une lentille convergente, pour orienter les rayons lumineux provenant d'au moins l'une des marques vers le capteur d'image.

Selon un mode de réalisation de l'invention, au moins une des marques est un agencement structuré de formes géométriques qui forment ensemble une combinaison codant une information d'identification, et/ou est associée à une information de caractérisation des propriétés optiques du système optique, et/ou est associée à une information de caractérisation des propriétés ou de l'état de fonctionnement d'un système de vision panoramique comprenant le système optique et éventuellement un système de traitement et/ou de visualisation associé au système optique, et/ou est associée à une information de caractérisation d'une gamme ou d'une famille de systèmes optiques.

Selon un mode de réalisation de l'invention, au moins une des marques est projetée ou apposée sur ou près d'un plan image intermédiaire.

Selon un mode de réalisation, le système optique comprend un dispositif mécanique d'alignement pour ajuster les positions relatives du dispositif de marquage, du système optique et du capteur d'image, et/ou ajuster la position relative du système optique par rapport au capteur d'image dans un plan parallèle à celui du capteur d'image, et/ou ajuster la position angulaire du système optique autour de l'axe optique du système optique, par rapport au capteur d'image.

Selon un mode de réalisation de l'invention, au moins une marque est introduite par le dispositif de marquage dans le système optique par une surface de la lentille frontale, non utile à la projection de l'image de la scène sur le capteur d'image, la marque étant visible de l'extérieur du système optique au travers de la lentille frontale et pouvant être associée à une source de lumière qui peut émettre suffisamment de lumière à travers la lentille frontale vers l'extérieur pour éclairer tout ou partie de la scène observée par le système optique.

L'invention concerne également un procédé d'identification d'un système optique projetant une image d'une scène sur un capteur d'image. Selon un mode de réalisation, le système optique est tel que défini ci-avant, le procédé comprenant des étapes consistant à introduire dans le système optique au moins une marque située en dehors de la scène, et visible dans l'image fournie par le capteur d'image en même temps que l'image de la scène, rechercher au moins une marque dans l'image fournie par le capteur d'image, identifier au moins l'une des marques trouvées, et caractériser le système optique à partir de la marque identifiée.

Selon un mode de réalisation de l'invention, au moins une des étapes de recherche et d'identification est réalisée par un procédé numérique.

Selon un mode de réalisation de l'invention, l'étape de recherche d'une marque dans l'image comprend l'application d'un traitement numérique de seuillage pour séparer certaines couleurs de l'image, et/ou repérer des zones de l'image comportant une caractéristique propre à au moins une marque, et/ou l'application d'un traitement numérique de reconnaissance de forme analysant des caractéristiques géométriques intrinsèques de formes détectées dans l'image, et/ou comparant les formes détectées à une forme de référence.

Selon un mode de réalisation, le procédé comprend une étape d'analyse de la position et/ou de l'orientation et/ou des dimensions d'au moins une marque identifiée pour déterminer, par comparaison ou calcul la position et/ou l'orientation de l'image projetée de la scène sur le capteur d'image, et/ou pour déterminer par comparaison ou calcul le contour de l'image projetée de la scène sur le capteur d'image.

Selon un mode de réalisation, le procédé comprend une étape détermination du contour de l'image projetée de la scène sur le capteur d'image par application d'une ou plusieurs itérations d'algorithmes de détection de contours.

Selon un mode de réalisation, le procédé comprend une étape d'introduction d'au moins une marque dans le système optique de manière à ce que la marque soit visible de l'extérieur du système optique, et éventuellement une étape d'analyse pour déterminer, à partir de la marque, des données de caractérisation du système optique pour un système numérique de traitement d'image.

Ces objets, caractéristiques et avantages ainsi que d'autres de la présente invention seront exposés plus en détail dans la description suivante de modes de réalisation de l'invention, faite à titre non limitatif en relation avec les figures jointes parmi lesquelles :

- la figure 1 est une vue latérale d'un système optique à très grand angle, équipé d'un dispositif de marquage selon un mode de réalisation de l'invention,
- les figures 2a et 2b sont des vues d'une partie du système optique représenté sur la figure 1, illustrant des variantes du dispositif de marquage,
- la figure 3 est une vue latérale d'un système optique à très grand angle, équipé d'un dispositif de marquage selon un autre mode de réalisation de l'invention,
- les figures 4a et 4b sont des vues d'une partie du système optique représenté sur la figure 3, illustrant des variantes du dispositif de marquage,
- la figure 5 représente schématiquement en perspective un système optique à très grand angle équipé de plusieurs dispositifs de marquage selon l'invention,
- la figure 6 représente en perspective un dispositif d'alignement selon l'invention, permettant de régler la position relative du système optique par rapport au capteur,
- les figures 7a à 7d représentent des exemples de marquages selon l'invention,
- la figure 8 illustre les étapes d'un procédé d'identification d'un système optique, selon l'invention,
- la figure 9 illustre les étapes d'un procédé de calibration automatique d'une optique panoramique, selon l'invention,
- la figure 10 est une vue en perspective de trois-quarts arrière d'une lentille frontale d'un système optique à très grand angle, associé à un marquage selon autre un mode de réalisation de l'invention.

**I** - **Dispositif de marquage d'un système optique, par projection de marques sur le plan image**

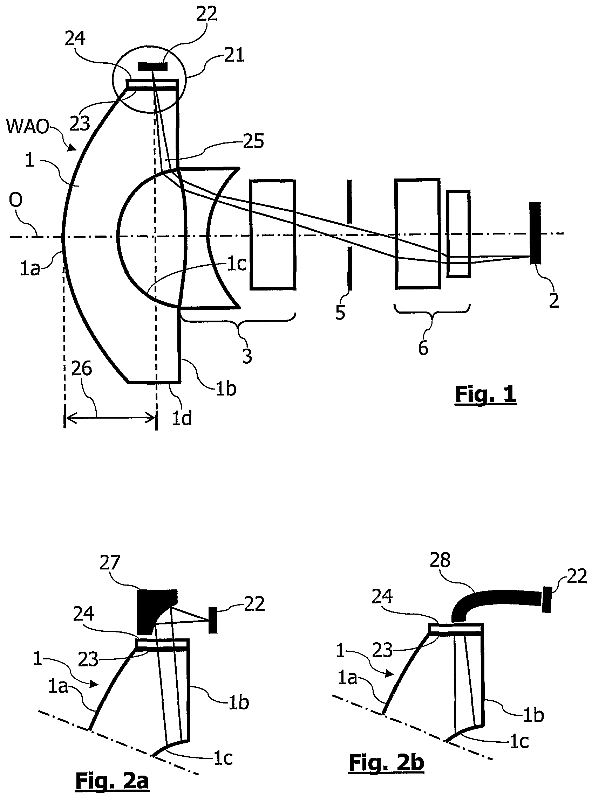

La figure 1 représente un système optique à très grand angle WAO. Le système optique comprend une lentille frontale 1 à très grand angle, un capteur d'image 2, un groupe de lentilles avant 3 comportant par exemple une lentille divergente disposée contre la lentille frontale 1 et une lentille convergente disposée entre la lentille divergente et un diaphragme 5, et un groupe de lentilles arrière 6 disposé entre le diaphragme 5 et le capteur d'image 2.

La lentille frontale 1 comprend une face frontale la, une face arrière plane 1b entourant une cavité centrale sensiblement hémisphérique 1c, et une face latérale cylindrique 1d située entre les faces frontale la et arrière 1b.

Selon un mode de réalisation de l'invention, le système optique WAO comprend un dispositif de marquage 21. Le dispositif marquage introduit une ou plusieurs marques (informations visuelles) dans le système optique de manière à ce que celles-ci soient visibles dans l'image générée par le capteur d'image 2.

De telles marques sont introduites en un ou plusieurs endroits dans le système optique WAO, de manière à ne pas occulter une partie de l'image de la scène.

En fonction des caractéristiques du système optique, un emplacement suffisant est prévu pour y insérer le dispositif de marquage selon l'invention. Ainsi, la marque produite par le dispositif de marquage est introduite par une face d'une des lentilles du système optique, et/ou de façon autonome juste avant le capteur d'image 2.

Plusieurs dispositifs de marquage distincts peuvent être prévus dans un même système optique pour transmettre des informations ou marques différentes ou provenant de sources différentes.

Les marques représentent un ou plusieurs logos, codes, symboles, lettres, chiffres, ou tout autre signe.

**a** - **Dispositif de marquage par projection de marques à travers de la lentille frontale**

Sur la figure 1, une ou plusieurs marques sont introduites dans le système optique par une surface optique de la lentille frontale 1 qui est distincte de la face extérieure utile la. La surface choisie ne sert pas à la projection d'une image de la scène observée sur le capteur d'image.

Dans l'exemple de la figure 1, cette surface est située sur la face latérale de la lentille 1. En effet, dans les optiques à très grand angle, les caractéristiques générales de la lentille frontale autorisent l'entrée de rayons lumineux par la face latérale 1d. Ce choix est privilégié dans la plupart des cas, car il constitue la solution la plus simple, et la moins coûteuse à mettre en oeuvre. Cette solution permet également d'obtenir une image de la marque sur le capteur d'image, de meilleure qualité, puisqu'elle profite de toutes les corrections et de la focalisation apportées par l'ensemble du système optique aux rayons lumineux provenant de la scène observée.

Selon un mode de réalisation, une source de lumière 22 telle qu'une diode électroluminescente (LED) est placée à une certaine distance de la face latérale 1d de la lentille frontale 1.

Selon un mode de réalisation, un masque 23 contenant la marque est disposé sur la face latérale 1d de la lentille frontale 1 ou à proximité de celle-ci.

Selon un mode de réalisation, le masque 23 peut être en contact direct avec la face latérale 1d ou bien être disposé à une certaine distance entre cette face et la source de lumière 22.

La face latérale 1d de la lentille frontale 1 peut être dépolie pour diffuser la lumière. Dans ce cas, le masque 23 est formé sur ou est disposé contre la face latérale 1d de la lentille frontale 1, ou encore est disposé à proximité de la face latérale.

Selon un mode de réalisation, un diffuseur 24 peut également être placé en contact avec le masque 23. Le diffuseur 24 est alors placé entre le masque et la source de lumière 22.

L'ensemble comprenant la source de lumière 22, le diffuseur 24 et masque 23 forme un ensemble émetteur 21.

Une certaine quantité de lumière produite par l'ensemble émetteur 21 est émise dans la lentille frontale 1 par sa face latérale 1d. Cette quantité de lumière forme un pinceau de lumière 25 qui est dirigé par la lentille 1 vers l'intérieur du système optique WAO. Le pinceau de lumière 25 correspond à un cône d'acceptance de lumière défini par les caractéristiques de la pupille d'entrée du système optique. La taille du cône est définie par la taille du diaphragme 5.

Seuls les rayons lumineux de ce cône passant par le diaphragme 5 sont considérés comme utiles au marquage. Les rayons lumineux après être passés par le diaphragme 5 sont focalisés par le groupe de lentilles 6 sur le capteur d'image 2 pour produire une image de la marque formée par le masque 23.

La position de l'ensemble émetteur 21 sur la face latérale 1d de la lentille frontale 1 détermine la position de l'image de la marque sur la surface sensible (plan image) du capteur d'image 2. L'image de la marque sur le capteur d'image est située à l'extérieur de la zone de projection de l'image panoramique de la scène observée formée sur le capteur d'image.

Plus précisément, la position de l'image de la marque sur la surface sensible du capteur d'image 2 est définie en fonction de la position angulaire par rapport à l'axe optique O du système optique, et de la distance entre ce dernier et l'ensemble émetteur 21, et en fonction de l'orientation du capteur d'image 2.

La position exacte de la marque sur le capteur d'image 2 peut être déterminée à l'aide d'un logiciel de conception optique ou par tout autre moyen de calcul, ou encore par des méthodes empiriques.

Il est à noter qu'une certaine quantité de lumière produite par l'ensemble émetteur 21 peut se trouver à l'extérieur du cône de lumière 25. Cette quantité de lumière dite "parasite" se propage librement dans la lentille frontale 1. L'utilisation d'un revêtement anti-réflexion sur les faces avant 2a et arrière 2b de la lentille frontale 1 permet de minimiser la lumière parasite provenant de réflexions et/ou réfractions sur les faces avant et arrière de la lentille frontale, qui pourrait se retrouver sur le capteur d'image 2. Cette lumière parasite peut produire des images "fantômes" du masque dans la zone de projection de l'image panoramique et dans la zone de projection adjacente, sur la surface sensible du capteur d'image.

L'effet de la lumière parasite sur le capteur d'image 2 peut être atténué, voire supprimé, en ajustant dynamiquement l'intensité de l'ensemble émetteur 21, pour rendre les images "fantômes" indétectables par le capteur d'image, ou empêcher que celles-ci nuisent à la qualité des images panoramiques fournies par le capteur d'image.

L'ensemble émetteur 21 peut être alternativement réalisé suivant d'autres modes de réalisation tels que ceux présentés sur les figures 2a et 2b.

Selon le mode de réalisation illustré par la figure 2a, la lumière provenant de la source 22 est redirigée vers le diffuseur 24, puis le masque 23, par une surface réfléchissante 27.

Selon le mode de réalisation illustré par la figure 2b, la lumière provenant de la source 22 est dirigée vers le diffuseur 24, puis le masque 23 par un ou plusieurs guides de lumière 28.

Bien entendu, le dispositif de marquage peut également introduire des marques sur le capteur d'image à partir d'une autre lentille du système optique WAO que la lentille frontale 1. Comme dans l'exemple de la figure 1, la marque est introduite par une surface de la lentille, non utile à la projection d'une image de la scène observée sur le capteur d'image.

**b - Dispositif de marquage par projection de marques sur une autre lentille du système optique**

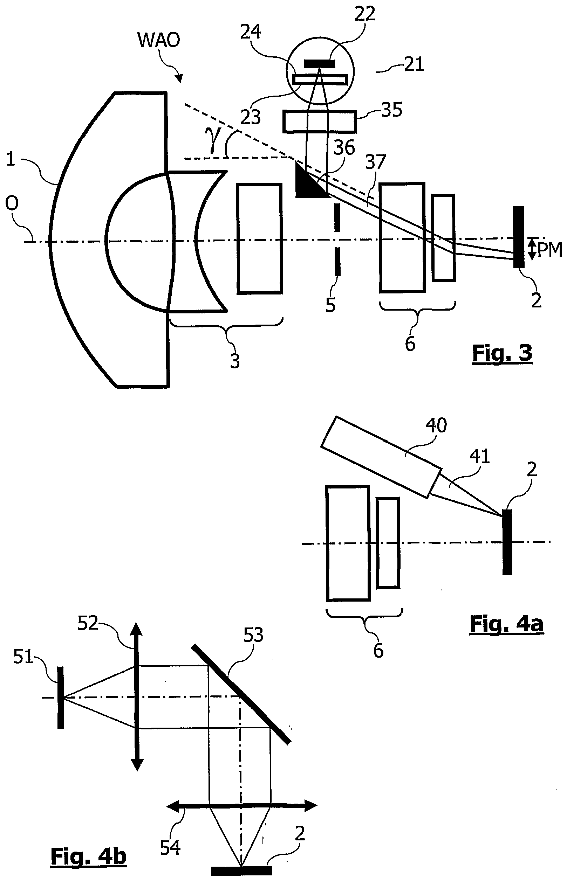

La figure 3 représente un système optique WAO à très grand angle sensiblement identique à celui de la figure 1. Les mêmes éléments y sont associés aux mêmes références.

Selon un mode de réalisation de l'invention, le système optique WAO représenté sur la figure 3 comprend un dispositif de marquage situé derrière le diaphragme 5 ou sur son pourtour.

Le dispositif de marquage comporte un ensemble émetteur de lumière 21 tel que celui décrit dans le mode de réalisation précédent. Ainsi, l'ensemble émetteur 21 comprend une source de lumière 22 telle qu'une diode électroluminescente (LED), et un masque contenant une marque 23, placé en contact ou à proximité de la source de lumière.

Selon un mode de réalisation, un diffuseur 24 peut également être placé en contact avec le masque 23, entre ce dernier et la source de lumière 22.

Un élément optique à puissance optique positive 35, tel qu'une lentille convergente, est placé de manière à produire une image du masque à l'infini ou à une position conjuguée du capteur d'image 2. Cette position conjuguée est déterminée par le groupe de lentilles arrière 6 du système optique. La position idéale du masque 23 est située exactement au foyer de l'élément optique 35.

L'élément optique 35 fournit une lumière quasi-collimatée qui est ensuite redirigée vers le groupe de lentilles 6 par un miroir de repli 36. L'orientation du miroir définit l'angle de projection $\gamma$ de la lumière quasi-collimatée incidente 37 sur le groupe de lentilles 6. La lumière ainsi dirigée vers le groupe de lentilles 6 est focalisée dans le plan image ou plan de la surface sensible du capteur d'image 2.

La position PM de l'image de la marque peut ainsi en première approximation être estimée par rapport au centre du capteur 2 ou axe optique O du système optique, de la manière suivante :

$$PM = EFL(N) \ x \ \gamma \qquad (1)$$

où EFL(N) est la longueur focale du groupe de lentilles arrière 6.

La position PM est ajustée de manière à garantir que l'image de la marque se retrouve sur la surface sensible du capteur d'image 2, en dehors de la zone de projection de la scène panoramique observée par le système optique WAO.

Il est à noter que le miroir 36 peut être remplacé par un élément optique diffractif.

**c** - **Dispositif de marquage par projection de marques directement sur le plan image**

Selon des modes de réalisation illustrés par les figures 4a, 4b, il est également possible d'intégrer entre les dernières lentilles 6 et le capteur d'image 2 un dispositif de marquage solidaire ou non du système optique.

Le dispositif de marquage comprend le cas échéant, un ou plusieurs miroirs de repli et une ou plusieurs lentilles pour focaliser une ou plusieurs marques en une position déterminée de la surface sensible du capteur d'image 2.

Selon un mode de réalisation illustré par la figure 4a, le dispositif de marquage 40 comprend un ensemble émetteur tel que l'ensemble émetteur 21 décrit précédemment, qui projette directement une ou plusieurs marques sur la surface sensible (plan image) du capteur d'image 2.

A cet effet, le dispositif de marquage 40 peut comprendre un ensemble optique comportant une ou plusieurs lentilles assurant la conjugaison optique du masque et du capteur d'image 2. Le dispositif de marquage 40 peut également comprendre un ou plusieurs miroirs de repli.

Le dispositif de marquage 40 est placé et orienté de manière à garantir que l'image de la marque se trouve sur la surface sensible du capteur d'image 2, en dehors de la zone de projection de l'image panoramique de la scène observée par le système optique WAO.

Selon un mode de réalisation illustré par la figure 4b, le dispositif de marquage est situé derrière le système optique à très grand angle WAO de manière à ce que l'image produite par le système optique coïncide avec un plan image intermédiaire 51.

Selon un mode de réalisation, une marque est apposée ou projetée sur ou près du plan image 51.

Selon un mode de réalisation, le dispositif de marquage comprend un relais optique comportant une ou plusieurs lentilles 52, 54, et le cas échéant, un ou plusieurs miroirs de repli 53, pour transférer l'image du système optique WAO formée dans le plan image intermédiaire 51 vers la surface sensible du capteur 2. Les lentilles 52, 54 qui schématisent un relais optique, pourraient donc être remplacées par tout dispositif optique permettant de transférer l'image du plan image intermédiaire 51 sur la surface sensible du capteur 2.

Le facteur de grandissement produit par le relais optique est préférablement unitaire en valeur absolue pour éviter toute perte de résolution. De plus, la qualité optique du relais est avantageusement prévue pour ne pas affecter la résolution du système optique WAO.

**d** - **Variantes de réalisation des dispositifs de marquage décrits précédemment**

Dans les modes de réalisation décrits précédemment, la source de lumière 22 peut être monochromatique ou non et être cohérente ou non. Ainsi, elle peut être constituée par une source laser.

La lumière qui est produite par la source de lumière 22, peut alternativement provenir de l'éclairage ambiant de la scène, qui est renvoyé, par exemple par réflexion, sur le masque 23.

Selon un mode de réalisation, la marque est constituée d'un ou plusieurs matériaux réfléchissants éclairés par la source de lumière. Dans ce cas, il n'est pas nécessaire de prévoir un masque.

Alternativement, la marque est constituée d'un ou plusieurs matériaux luminescents. Dans ce cas, il n'est pas nécessaire de prévoir une source de lumière et un masque.

Selon un mode de réalisation, la marque est produite par un hologramme. Dans ce cas, l'hologramme contient la marque, rendant inutiles le masque 23 ainsi que le diffuseur 24. L'hologramme peut être de type à réflexion ou à transmission.

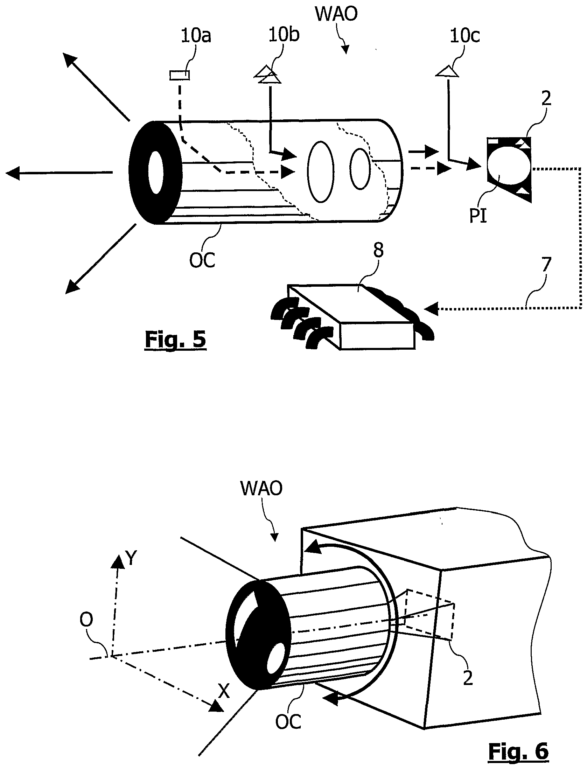

La figure 5 représente un système optique à très grand angle WAO selon l'invention, couplé par un système de transmission 7, à un système de traitement numérique 8. Le système WAO comprend un objectif OC tels que ceux représentés sur les figures 1 et 3, et un capteur d'image 2 connecté à un système de traitement numérique 8.

Selon un mode de réalisation, le système optique WAO comprend en combinaison un ou plusieurs des dispositifs de marquage décrits précédemment. Ainsi, une marque 10a est introduite dans l'objectif par la face latérale de la lentille frontale. Une marque 10b est introduite au voisinage du diaphragme de l'objectif, et une marque 10c est envoyée directement sur la surface sensible du capteur 2. Toutes les marques sont introduites dans le système optique de manière à apparaître sur la surface sensible du capteur en dehors de la zone de projection de l'image panoramique PI

## II - Dispositif mécanique de réglage spatial du dispositif de marquage et/ou du système optique

Selon un mode de réalisation, il est prévu un dispositif mécanique interne au système optique WAO permettant d'aligner le dispositif de marquage et tous les composants optiques du système optique avec le capteur d'image 2.

A titre d'exemple, le dispositif mécanique peut comprendre des rainures, détrompeurs et/ou d'autres éléments. Un tel dispositif mécanique est souhaitable lorsque le système optique WAO n'est pas totalement à symétrie de révolution et qu'il présente une anamorphose comme dans le cas des systèmes optiques panomorphes.

Ainsi, selon un mode de réalisation illustré par la figure 6, il est prévu un dispositif mécanique, agissant sur une partie ou la totalité de celui-ci, pour ajuster la position et l'orientation de l'ensemble de l'image (marques et image projetée de la scène observée) sur la surface sensible du capteur d'image 2.

Le dispositif mécanique est solidaire ou non du système optique WAO, et s'ajoute à tout autre réglage habituel comme le réglage du foyer du système optique.

Plus précisément, le dispositif mécanique permet d'ajuster la position de l'image dans le plan image suivant deux axes distincts X et Y, et en rotation autour de l'axe optique 0.

Un tel dispositif d'ajustement trouve un réel intérêt, car en général, les seuls dispositifs de réglage suivant les axes X et Y n'agissent pas au niveau de l'objectif (système optique), mais seulement au niveau du capteur d'image ou de son support, ou bien encore sur tout ou partie du dispositif interne de la caméra. De plus, il n'est en général pas prévu sur les caméras de réglage de la position angulaire des composants optiques autour de l'axe optique 0.

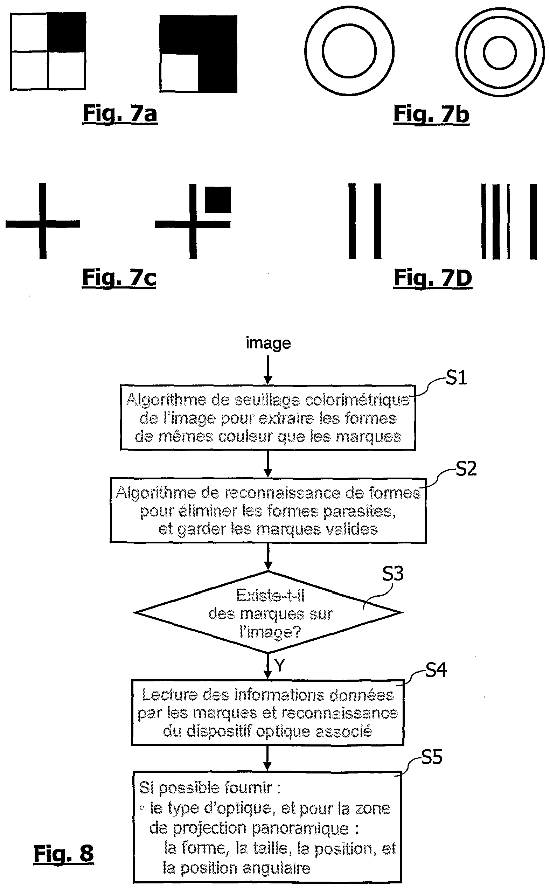

Les figures 7a à 7d représentent quelques exemples de marques utilisées pour marquer un système optique. Ainsi, les marques projetées sur le capteur 2 peuvent être de formes différentes et représenter différents symboles ou dessins tels que des carrés (figure 7a), des cercles (figure 7b), des croix (figure 7c) ou des lignes (figure 7d), ou bien encore des chiffres ou des lettres.

Les marques sont avantageusement constituées de symboles géométriques simples issus de séquences ordonnées, codant des informations d'identification. Les marques de chaque séquence sont constituées de combinaisons d'un nombre limité de formes géométriques différentes, chaque combinaison codant une information d'identification. Ainsi, sur la figure 7a, chaque marque est constituée d'une combinaison de carrés noirs et/ou blancs de dimensions identiques. Sur la figure 7b, les marques sont constituées d'un nombre variable de cercles concentriques. Sur la figure 7c, les marques sont constituées d'une combinaison d'une croix noire et de carrés noir ou blanc. Sur la figure 7d, les marques sont constituées de codes à barres.

Il est à noter que l'utilisation de séquences ordonnées de symboles géométriques simples présente l'avantage de permettre une définition binaire de l'information et de multiplier le nombre de combinaisons possibles. De telles séquences de symboles présentent également l'avantage d'être plus simples à reconnaître par un système numérique, et plus résistantes aux bruits, interférences et perturbations potentiellement générées par le système optique ou les systèmes de compression numérique destructifs, généralement utilisés pour le transport de contenus vidéo.

La reconnaissance de ces marques, ou d'une partie ciblée de celles-ci, permet de caractériser et d'identifier le système optique, et déterminer s'il est référencé ou connu par un système numérique de traitement ou de visualisation associé.

## III - Procédé d'identification automatique d'une optique panoramique selon l'invention

Les marques projetées sur le capteur d'image 2 en dehors de la zone de projection de l'image de la scène observée par le système optique WAO sont analysées et reconnues grâce à divers algorithmes selon divers modes de réalisation. Une représentation sous la forme d'un organigramme de ces algorithmes est proposée dans la figure 8.

### a - Procédé d'identification d'un système optique

Sur la figure 8, le procédé d'identification comprend des étapes S1 à S5.

A l'étape S1, l'image est tout d'abord traitée numériquement afin de séparer les marques présentes dans l'image du reste de l'image. Cette opération est effectuée par exemple au moyen d'algorithmes dits de seuillage colorimétrique, pour séparer certaines couleurs pertinentes si le type de marques recherché est caractérisé par des couleurs spécifiques.

De telles marques sont plus simples à séparer si elles sont situées dans une plage chromatique restreinte. Par exemple, si les marques sont de couleur rouge, l'algorithme de seuillage colorimétrique permet d'extraire toutes les formes rouges contenues dans l'image.

A l'étape S2, un algorithme dit de reconnaissance de forme est appliqué à l'image issue du traitement de seuillage colorimétrique, c'est-à-dire composée uniquement des formes précédemment extraites par seuillage. Cette étape vise à déterminer si une marque est présente dans l'image, et si cette marque est valide selon une table de correspondance. Par exemple, si l'image est supposée comporter des marques en forme de carrés (telle que celles représentées sur la figure 7a), alors les caractéristiques (dimensions, orientation, position) de tous les carrés de l'image sont extraits de l'image.

A l'étape S3, si des marques valides (correspondant aux formes recherchées) ont ainsi été détectées dans l'image, l'étape S4 est exécutée, sinon le procédé d'identification se termine sans fournir d'informations de caractérisation du système optique.

A l'étape S4, les marques valides sont analysées pour déterminer des informations de caractérisation et d'identification du système optique. Cette opération d'identification peut être effectuée en extrayant une ou plusieurs information d'identification de chaque marque et en utilisant une table établissant une correspondance entre les informations susceptibles d'être extraites des marques avec des informations caractérisant le système optique. L'analyse des marques consiste par exemple à traduire chaque marque considérée comme un code optique (tel qu'un code à barres) en informations d'identification du système optique.

Les informations de caractérisation comprennent les quatre principaux paramètres de calibration d'une optique panoramique mentionnés précédemment, c'est-à-dire notamment un type de système optique, ainsi que des informations concernant la zone de projection panoramique dans l'image, à savoir sa position, sa position angulaire, sa forme et ses dimensions. Cette table de correspondance peut être stockée dans une base de données interne au système de traitement numérique associé, ou distante.

L'ensemble des marques introduites dans le système optique, conformément à l'invention peut comporter un certain nombre de marques caractéristiques et communes à un type ou à une famille donnée de systèmes optiques et connue par le système numérique associé, ainsi que des marques assurant l'identification précise du modèle de système optique.

Bien entendu, dans le cas de systèmes de vision panoramique spécialisés qui n'utilisent qu'un type très particulier de système optique, et qui par conséquent ne nécessitent pas d'être distingués d'autres systèmes optiques similaires, il n'est pas indispensable de prévoir des marques permettant d'identifier précisément le modèle de système optique.

**b - Utilisations de l'identification**

L'identification du système optique permet, notamment dans le cas de systèmes optiques panoramiques, de déterminer les fonctions de projection adéquates pour corriger les distorsions engendrées par les optiques panoramiques.

L'identification du système optique peut également être utilisée en tant que protection contre la copie (projection de logos ou marques de commerce sur le capteur). Elle peut également être utilisée pour suivre et contrôler géographiquement la commercialisation du système, pour gérer des droits privilégiés sur certains systèmes optiques propriétaires. Selon un mode de réalisation, le système numérique peut ainsi autoriser ou interdire l'utilisation ou l'accès à l'image.

**IV - Procédé de calibration d'un système optique panoramique**

Une fois que la reconnaissance du système optique a été effectuée avec succès, les marques peuvent servir à déterminer la position, la taille et la position angulaire de l'image PI projetée sur la surface sensible du capteur d'image 2 selon un procédé décrit plus loin.

Selon un mode de réalisation, les marques sont disposées et arrangées géométriquement relativement à la zone de projection panoramique PI sur l'image, de manière à servir de référentiels dimensionnels et spatiaux.

Par comparaison des caractéristiques (position, orientation et taille) des marques dans l'image fournie par le capteur 2 à celles de marques de référence, le système numérique de traitement 8 détermine les caractéristiques de la zone de projection panoramique (forme, dimensions, position, position angulaire). A partir de ces caractéristiques, le système numérique détermine les opérations de transformation géométrique à appliquer à l'image pour obtenir une image dans laquelle les distorsions introduites par l'optique panoramique ont été supprimées au moins partiellement.

Les caractéristiques de la zone de projection panoramique, ainsi que les informations relatives aux fonctions de projection permettant de corriger les éventuelles distorsions de l'image panoramique et rétablir les perspectives de la scène observée, peuvent être stockées dans une base de données accessible au système de traitement 8.

Les caractéristiques de la zone de projection panoramique ou de toute autre zone de l'image, déterminées à l'aide des marques peuvent servir d'approximation, en vue d'effectuer une détermination plus précise de ces caractéristiques. En effet, il se peut que l'alignement relatif des marques et de la zone de projection panoramique ne soit pas parfait. La présence et la détection des marques permettent de circonscrire la zone de recherche dans l'image fournie par le capteur, et ainsi éviter les erreurs et/ou réduire le temps de traitement.

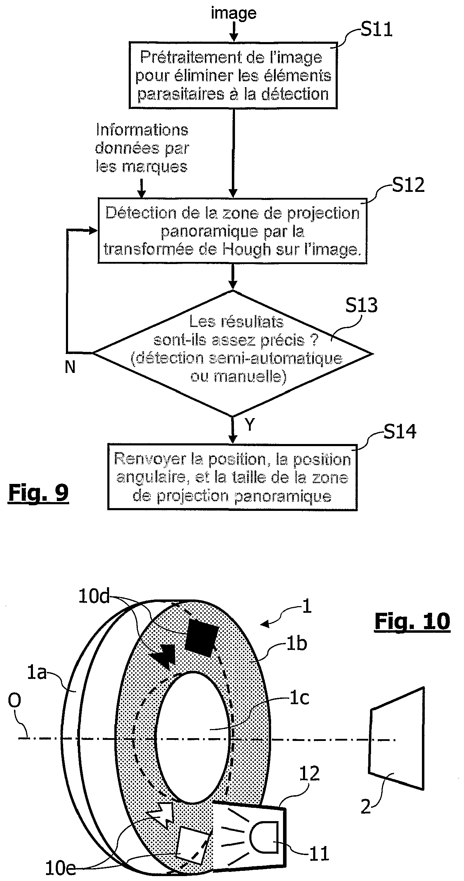

Dans ce cas, un traitement complémentaire peut être mis en oeuvre par le système de traitement 8 pour détecter les contours de la zone de projection panoramique. Ce traitement illustré par la figure 9 comprend des étapes S11 à S14.

A l'étape S11, un prétraitement optionnel peut être appliqué à l'image fournie par le capteur. Ce prétraitement comprend par exemple une détermination des contours de l'image pour éliminer des pixels parasitaires nuisibles à la détection correcte de la zone de projection panoramique.

A l'étape S12, le traitement repère la zone de projection panoramique PI et fournit des indications de taille, de position et d'orientation de cette zone dans l'image, en utilisant les caractéristiques de cette zone extraites des marques.

Par exemple, si la zone de projection panoramique PI a une forme d'ellipse ou d'un cercle, la transformée de Hough (algorithme connu dans l'analyse d'image) appliquée à l'image permet de repérer la zone PI et donne des indications de taille, d'orientation et de position de la zone PI dans l'image.

A l'étape S13, si les résultats obtenus présentent une précision suffisante, les caractéristiques obtenues sont utilisées pour déterminer les opérations de transformation géométrique à appliquer aux images (étape S14).

En revanche, si les résultats obtenus par la calibration automatique ne sont pas suffisamment précis, l'étape S12 est à nouveau exécutée en utilisant les caractéristiques obtenues lors de l'exécution précédente.

Dans le cas d'un résultat insatisfaisant, les erreurs peuvent être corrigées ou compensées manuellement afin de permettre au dispositif numérique de recalculer la forme et la position de la zone de projection panoramique PI en tenant compte des corrections.

Si aucun résultat n'est concluant, il peut être prévu une procédure permettant de définir manuellement les contours de la zone de projection panoramique.

L'ensemble des informations ainsi réunies constitue les données de calibration du système optique.

### V - Dispositif de marquage d'un système optique des marques visibles à travers la lentille frontale

La présente demande vise également à protéger d'une manière indépendante un dispositif de marquage faisant intervenir des marques visibles de l'extérieur de l'objectif à travers la lentille frontale 1. Il va de soi qu'un tel dispositif de marquage peut être utilisé indépendamment de tout autre dispositif de marquage, et en particulier, de ceux décrits précédemment.

La figure 10 représente la lentille frontale 1 d'un système optique très grand angle, telle que décrite en référence à la figure 1. La lentille frontale 1 présente une face frontale la, et une face arrière 1b qui peut être plane, entourant une cavité centrale sensiblement hémisphérique 1c. Le capteur d'image 2 est généralement disposé sur l'axe optique 0 de la lentille frontale de manière à ce que la lentille 1 combinée aux autres lentilles de l'objectif (non représentées sur cette figure) forme une image sur la surface sensible du capteur d'image 2.

Généralement, la face arrière 1b de la lentille frontale n'est pas utile à la transmission de l'image. Habituellement, cette face 1b est rendue opaque et/ou noircie pour limiter les possibilités d'intrusion de rayons lumineux parasites dans le système optique.

Une telle zone non utile apparaît en face arrière de la lentille frontale dans la plupart des systèmes optiques, qu'ils soient à très grand angle ou à champ de vision plus étroit.

Selon un mode de réalisation, une ou plusieurs marques sont apposées sur ou à proximité d'une surface non utile de la lentille frontale du système optique. Ainsi, sur la figure 10, une ou plusieurs marques 10d, 10e sont apposées sur la face arrière 1b de la lentille 1.

Les marques sont réalisées dans des matériaux pouvant être visibles avec ou sans éclairage depuis la face frontale la de la lentille frontale 1. Ainsi, les marques peuvent être visibles à l'oeil nu ou avec un appareillage adéquat dans le cas où elles n'apparaissent que dans des fréquences situées en dehors du spectre des couleurs visibles par l'homme, ou s'il s'agit d'hologrammes.

Selon un mode de réalisation, les surfaces non utiles autour des marques sont recouvertes d'un matériau absorbant la lumière pour obtenir un contraste plus important.

Selon un mode de réalisation une ou plusieurs sources de lumière 11 peuvent être disposées derrière les marques afin d'améliorer leur visibilité. Ainsi, dans l'exemple de la figure 1, les marques 10e sont réalisées en retirant localement la couche qui rend la face arrière 1b partiellement ou totalement opaque, pour permettre le passage de la lumière au travers des marques.

Par une commande adéquate des sources de lumière, les marques 10e peuvent permettre de fournir des informations sur l'état de fonctionnement du système optique ou de l'ensemble du système de vision panoramique.

Les sources de lumière peuvent émettre ou non dans le spectre des couleurs visibles. De préférence, ces sources de lumière comprennent des diodes électroluminescentes (LEDs), qui sont disposées en arrière de la face arrière 1b de la lentille frontale 1, à l'intérieur du système optique. Les sources de lumière projettent ainsi de la lumière vers l'extérieur de la lentille frontale 1 et donc du système optique, en traversant la face frontale la.

La lumière émise au travers des marques 10e à l'intérieur de la lentille frontale 1 se propage alors jusqu'à la face frontale la. A cette interface, la lumière subit une réfraction ainsi qu'une réflexion. Les rayons lumineux transmis par réfraction se retrouvent alors à l'extérieur de la lentille 1. Ces rayons lumineux sont donc visibles de l'extérieur du système optique.

De préférence, la surface de la face frontale 1a de la lentille frontale 1 est recouverte d'un revêtement anti-réflexion qui maximise la transmission à l'interface et minimise la réflexion.

Si la lumière diffusée à l'extérieur est assez puissante, elle peut également servir à éclairer la scène observée par le système optique.

La longueur d'onde ou la bande spectrale de l'éclairage peut être choisie pour favoriser l'identification et/ou le repérage du système optique par des dispositifs adéquats (comme par exemple des systèmes de vision infrarouge), et/ou produire un éclairage particulier.

Une certaine quantité de lumière peut néanmoins parvenir par réflexion, puis transmission, jusqu'au capteur d'image 2 et produire une "image fantôme" dans la zone de vision panoramique ou sur toute autre surface du capteur, dans le cas d'optiques non panoramiques. L'intensité de la source lumineuse 11 est donc de préférence choisie pour éviter ce phénomène, ou tout au moins, qu'il soit imperceptible par le capteur d'image 2.

Selon un mode de réalisation, les sources de lumière 11 sont focalisées et orientées pour limiter les réflexions parasites sur le capteur d'image 2. On peut prévoir également un dispositif de masquage 12, par exemple ayant une forme de tronc de cône ou de caisson, assurant une séparation optique à l'arrière de la source lumineuse avec le reste du système optique.

Selon l'invention, le système optique WAO comprend en combinaison un ou plusieurs des dispositifs de marquage décrits précédemment. Ainsi, la face arrière de la lentille frontale de l'objectif OC comporte des marques 10d, 10e, et des marques 10a, 10b, 10c sont introduites en différents points de l'objectif de manière à être projetées sur la surface sensible du capteur 2, comme décrit précédemment en référence à la figure 5.

Une calibration semi-automatique ou manuelle est requise lorsque les marques d'identification du système optique ne figurent que sur la face arrière de la lentille frontale, et donc ne sont pas projetées sur le capteur d'image.

Dans ce cas, un opérateur doit en effet fournir au système numérique de traitement des informations d'identification du système optique. Sur la base de telles informations, le système numérique détermine les caractéristiques géométriques de la zone de projection panoramique (étape S12). Ces informations ajoutées aux informations relatives au profil de distorsion du système optique permettent de calibrer le système optique.

Ces informations peuvent être stockées et associées dans une base de données à des informations d'identification de la caméra, pour être ensuite redistribuées ou bien directement utilisées par le dispositif numérique de traitement 8.

## PRINCIPAUX PROBLEMES RESOLUS PAR L'INVENTION :

L'invention telle que décrite précédemment permet de déterminer le profil de distorsion.

Contrairement aux objectifs "fish-eyes", les optiques panomorphes, ainsi que les optiques catadioptriques peuvent avoir des fonctions de distribution angulaire et des formes de zone de projection panoramique très variées. Il est donc impossible de déterminer, sans identifier préalablement le type exact de système optique, quelles formules mathématiques doivent être mise en oeuvre pour corriger les distorsions. Seuls des dispositifs de mesure ou de calibration externes et complexes permettent d'obtenir l'information nécessaire à la correction.

Grâce à un dispositif de marquage du type introduisant une marque sur le capteur d'image (figures 1 à 5), il est possible d'identifier le système optique panoramique. Ainsi identifié, il est possible de déterminer la correction de distorsion adéquate, si le type de système optique est connu du système de traitement 8. Ce dispositif de marquage permet une identification totalement automatisable par une analyse numérique de l'image produite sur le capteur.

Ce type de dispositif de marquage permet également de déterminer le positionnement de l'image panoramique sur le capteur d'image.

En effet, une optique panoramique produit une image panoramique qui généralement n'occupe pas la totalité du capteur. Pour corriger la distorsion à l'aide d'un dispositif numérique, il est important de connaître avec précision la position, l'orientation et la taille relative de l'image panoramique pour pouvoir appliquer d'une manière adéquate des fonctions numériques de correction des distorsions. Des procédés de traitement numérique permettent de déterminer la position, la taille la forme et l'orientation de l'image panoramique. Cependant, ces procédés peuvent fréquemment engendrer des erreurs importantes ou même un total disfonctionnement si la forme du contour de l'image panoramique est altérée par des artefacts lumineux (comme un éblouissement provoquant une irisation sur des parties du contour de l'image) et/ou par la présence de zones à très faible luminosité en bordure de l'image.

Grâce à un dispositif de marquage de ce type, une ou plusieurs marques spécifiques sont projetées sur le capteur d'image à travers le système optique. Ces marques permettent d'identifier le système optique panoramique. Ces marques aux dimensions et positions relatives connues peuvent alors servir de repères dimensionnels pour estimer ou déterminer précisément la position, l'orientation et la taille de l'image, et ainsi pour appliquer correctement les formules de correction de distorsion.

Ce type de dispositif de marquage permet d'effectuer une calibration automatique par un système de traitement ou de visualisation, sans qu'il soit nécessaire d'accéder à une base de donnée de calibration individuelle des caméras.

En effet, une optique panoramique produit une image qui comporte des distorsions. Afin de corriger numériquement ces distorsions, une étape de calibration manuelle ou semi-automatique du système de vision panoramique est effectuée. Cette opération est en principe réalisée uniquement lors de l'installation du dispositif et reste souvent complexe. Elle doit être généralement opérée par un technicien formé à cet effet. L'information de calibration ainsi générée est généralement stockée dans un fichier puis partagée avec les différents logiciels de visualisation. Ceci implique nécessairement que les logiciels de visualisation doivent avoir accès, en plus de l'image produite par la caméra, à la base de donnée relative à la caméra, qui contient ses paramètres individuels de calibration. Ceci complexifie l'architecture des logiciels et les protocoles de communication et limite considérablement les possibilités d'interopérabilité, rendant pratiquement impossible la calibration des optiques panoramiques à la volée par des systèmes de visualisation ne pouvant avoir accès qu'au flux vidéo.

Au contraire, grâce à un dispositif de marquage du type projetant des marques sur le capteur d'image, le système numérique peut identifier numériquement et automatiquement le système optique panoramique référencé, et ainsi appliquer la correction de distorsion adéquate sans nécessairement avoir à recourir à une base de donnée comportant tous les paramètres individuels de la caméra.

Grâce à un dispositif de marquage du type produisant des marques visibles de l'extérieur du système optique (figure 10), il est possible d'identifier visuellement l'optique, simplement en regardant à travers la lentille frontale de l'extérieur du système. Même si le dispositif de marquage est encastré dans un support, masquant les informations généralement inscrites sur le boîtier du système optique, les marques apposées sur la face arrière de la lentille frontale restent toujours visibles. Le système optique peut ainsi être identifié, et pour un modèle d'optique référencé, il est possible de déterminer semi automatiquement la correction de distorsion appropriée.

Ces deux types de dispositifs de marquage peuvent être utilisés conjointement pour déterminer le profil de distorsion.

Il apparaîtra clairement à l'homme de l'art que la présente invention est susceptible de diverses variantes de réalisation et d'applications. En particulier, l'invention ne s'applique pas nécessairement à un système optique panoramique, mais à tout système optique fournissant des images numériques.

Bien que cela ne soit pas souhaitable, des marques peuvent également être introduites dans le système optique de manière à apparaître dans la zone de projection de l'image panoramique dans les images fournies par le capteur. Dans ce cas, même les faces d'une lentille du système optique, utiles à la projection d'une image de la scène sur le capteur d'image, peuvent être utilisées pour projeter des marques sur le capteur d'image. L'effet néfaste de telles marques peut n'être que temporaire si ces marques sont produites par une source de lumière qui peut être désactivée par exemple par une commande manuelle, ou activée uniquement durant une phase d'initialisation du système de vision panoramique. A ce sujet, il est à noter que la présence des marques n'a d'intérêt que pour effectuer l'identification et la calibration du système optique. Une fois que ces opérations sont effectuées, les marques peuvent être "éteintes" par une commande appropriée des sources de lumières.

**Revendications**

1. Système optique (WAO) comprenant un capteur d'image (2) et un objectif détachable comportant au moins une lentille frontale (1) projetant une image (PI) d'une scène sur le capteur d' image et un dispositif de marquage introduisant dans le système optique au moins une marque (10a, 10b, 10c) située en dehors de la scène, permettant de caractériser l'objectif, et qui est visible dans l'image fournie par le capteur d'image (2) en même temps que l'image de la scène, le dispositif de marquage comprenant des moyens (21, 25, 36) pour introduire la marque par une surface d'une lentille de l'objectif, non utile à la projection d'une image sur le capteur d'image, et/ou pour introduire la marque au voisinage d'un diaphragme (5) de l'objectif, et/ou pour projeter directement la marque sur le capteur d'image.

2. Système optique selon la revendication 1, dans lequel le dispositif de marquage projette au moins une marque sur le capteur d'image (2), en dehors de la zone projection de l'image de la scène (PI) sur le capteur d'image.

3. Système optique selon la revendication 1 ou 2, dans lequel le dispositif de marquage comprend une source de lumière (22) émettant de la lumière qui est transmise ou réfléchie par au moins une des marques, dans le spectre visible et/ou non visible, vers le capteur d'image (2).

4. Système optique selon l'une des revendications 1 à 3, dans lequel la surface non utile de la lentille est une face latérale (1d) de la lentille frontale (1), la face latérale pouvant être dépolie.

**5.** Système optique selon l'une des revendications 1 à 4, dans lequel le dispositif de marquage comprend une source de lumière (22), un masque (23) formant au moins une marque, par lequel des rayons lumineux produits par la source de lumière sont introduits dans le système optique et atteignent le capteur d'image (2), et entre la source de lumière et le masque, éventuellement un diffuseur (24) et/ou un guide de lumière (28) et/ou une surface réfléchissante (27) pour rediriger la lumière provenant de la source de lumière vers le masque.

**6.** Système optique selon l'une des revendications 1 à 5, dans lequel le dispositif de marquage comprend une surface réfléchissante (36) et/ou un élément diffractif, et/ou un élément optique de puissance positive (35) tel qu'une lentille convergente, pour orienter les rayons lumineux (37) provenant d'au moins l'une des marques (10b) vers le capteur d'image (2).

**7.** Système optique selon l'une des revendications 1 à 6, dans lequel au moins une des marques est un agencement structuré de formes géométriques qui forment ensemble une combinaison codant une information d'identification, et/ou est associée à une information de caractérisation des propriétés optiques du système optique, et/ou est associée à une information de caractérisation des propriétés ou de l'état de fonctionnement d'un système de vision panoramique comprenant le système optique et éventuellement un système de traitement et/ou de visualisation (8) associé au système optique, et/ou est associée à une information de caractérisation d'une gamme ou d'une famille de systèmes optiques.

**8.** Système optique selon l'une des revendications 1 à 7, dans lequel au moins une des marques est projetée ou apposée sur ou près d'un plan image intermédiaire (51).

**9.** Système optique selon l'une des revendications 1 à 8, comprenant un dispositif mécanique d'alignement pour ajuster les positions relatives du dispositif de marquage, du système optique (WAO) et du capteur d'image (2), et/ou ajuster la position relative du système optique par rapport au capteur d'image dans un plan parallèle à celui du capteur d'image, et/ou ajuster la position angulaire du système optique autour de l'axe optique (O) du système optique, par rapport au capteur d'image.

**10.** Système optique selon l'une des revendications 1 à 9, dans lequel au moins une marque (10d, 10e) est introduite par le dispositif de marquage dans le système optique par une surface de la lentille frontale (1), non utile à la projection de l'image (PI) de la scène sur le capteur d'image (2), la marque étant visible de l'extérieur du système optique au travers de la lentille frontale et pouvant être associée à une source de lumière (11) qui peut émettre suffisamment de lumière à travers la lentille frontale vers l'extérieur pour éclairer tout ou partie de la scène observée par le système optique.

**11.** Procédé de caractérisation de l'objectif d'un système optique (WAO) projetant une image (PI) d'une scène sur un capteur d'image (2),
**caractérisé en ce que** le système optique est conforme à l'une des revendications 1 à 10, le procédé comprenant des étapes consistant à :

- introduire dans le système optique au moins une marque (10a, 10b, 10c) située en dehors de la scène, et visible dans l'image fournie par le capteur d'image (2) en même temps que l'image de la scène,
- rechercher au moins une marque dans l'image fournie par le capteur d'image,
- identifier au moins l'une des marques trouvées, et
- caractériser le système optique à partir de la marque identifiée.

**12.** Procédé selon la revendication 11, dans lequel au moins une des étapes de recherche et d'identification est réalisée par un procédé numérique.

**13.** Procédé selon l'une des revendications 11 et 12, dans lequel l'étape de recherche d'une marque dans l'image comprend l'application d'un traitement numérique de seuillage pour séparer certaines couleurs de l'image, et/ou repérer des zones de l'image comportant une caractéristique propre à au moins une marque, et/ou l'application d'un traitement numérique de reconnaissance de forme analysant des caractéristiques géométriques intrinsèques de formes détectés dans l'image, et/ou comparant les formes détectées à une forme de référence.

**14.** Procédé selon l'une des revendications 11 à 13, comprenant une étape d'analyse de la position et/ou de l'orientation et/ou des dimensions d'au moins une marque identifiée pour déterminer, par comparaison ou calcul la position et/ou l'orientation de l'image projetée (PI) de la scène sur le capteur d'image (2), et/ou pour déterminer par comparaison ou calcul le contour de l'image projetée de la scène sur le capteur d'image.

15. Procédé selon l'une des revendications 11 à 14, comprenant une étape détermination du contour de l'image projetée (PI) de la scène sur le capteur d'image (2) par application d'une ou plusieurs itérations d'algorithmes de détection de contours.

16. Procédé selon l'une des revendications 11 à 15, comprenant une étape d'introduction d'au moins une marque (10d, 10e) dans le système optique de manière à ce que la marque soit visible de l'extérieur du système optique, et éventuellement une étape d'analyse pour déterminer, à partir de la marque, des données de caractérisation du système optique pour un système numérique de traitement d'image.

**Patentansprüche**

1. Optisches System (WAO), das einen Bildsensor (2) und ein abnehmbares Objektiv umfasst, das mindestens eine Frontlinse (1) umfasst, die ein Bild (PI) einer Szene auf den Bildsensor projiziert und eine Markiervorrichtung, die in dem optischen System mindestens eine Markierung (10a, 10b, 10c) einfügt, die außerhalb der Szene liegt, die ermöglicht, das Objektiv zu charakterisieren, und die in dem vom Bildsensor (2) bereitgestellten Bild zur gleichen Zeit wie das Bild der Szene sichtbar ist, wobei die Markiervorrichtung Mittel (21, 25, 36) zum Einfügen der Markierung durch eine Oberfläche einer Linse des Objektivs umfasst, die nicht nützlich für die Projektion eines Bildes auf den Bildsensor ist, und/oder zum Einfügen der Markierung in der Umgebung einer Blende (5) des Objektivs, und/oder zum direkten Projizieren der Markierung auf den Bildsensor.

2. Optisches System nach Anspruch 1, wobei die Markiervorrichtung mindestens eine Markierung auf den Bildsensor (2) projiziert, außerhalb des Projektionsbereichs des Bildes der Szene (PI) auf den Bildsensor.

3. Optisches System nach Anspruch 1 oder 2, wobei die Markiervorrichtung eine Lichtquelle (22) umfasst, die Licht emittiert, das von mindestens einer der Markierungen im sichtbaren und/oder nicht sichtbaren Spektrum an den Bildsensor (2) übertragen oder reflektiert wird.

4. Optisches System nach einem der Ansprüche 1 bis 3, wobei die nicht nützliche Oberfläche der Linse eine Seitenfläche (1d) der Frontlinse (1) ist, wobei die Seitenfläche mattiert sein kann.

5. Optisches System nach einem der Ansprüche 1 bis 4, wobei die Markiervorrichtung eine Lichtquelle (22), eine Maske (23), die mindestens eine Markierung ausbildet, durch die die von der Lichtquelle erzeugten Lichtstrahlen in das optische System eingeführt werden und den Bildsensor (2) erreichen, und zwischen der Lichtquelle und der Maske gegebenenfalls einen Diffusor (24) und/oder einen Lichtleiter (28) und/oder eine reflektierende Oberfläche (27) zum Umleiten des Lichts, das von der Lichtquelle hin zur Maske kommt, umfasst.

6. Optisches System nach einem der Ansprüche 1 bis 5, wobei die Markiervorrichtung eine reflektierende Oberfläche (36) und/oder ein lichtbeugendes Element und/oder ein optisches Element mit positiver Kraft (35), wie eine Sammellinse, umfasst, um die Lichtstrahlen (37), die von mindestens einer der Markierungen (10b) kommen, zum Bildsensor (2) hin zu richten.

7. Optisches System nach einem der Ansprüche 1 bis 6, wobei mindestens eine der Markierungen eine Anordnung aus geometrischen Formen ist, die zusammen eine Kombination bilden, die eine Identifikationsinformation kodiert und/oder einer Information zur Charakterisierung optischer Eigenschaften des optischen Systems zugeordnet wird, und/oder die einer Information zur Charakterisierung von Eigenschaften oder zum Funktionszustand eines Systems einer Panoramaansicht zugeordnet wird, umfassend das optische System, und gegebenenfalls ein System zur Behandlung und/oder Visualisierung (8), das dem optischen System zugeordnet ist, und/oder einer Information zur Charakterisierung eines Sortiments oder einer Familie optischer Systeme zugeordnet ist.

8. Optisches System nach einem der Ansprüche 1 bis 7, wobei mindestens eine der Markierungen auf eine oder bei einer Zwischenbildebene projiziert oder angebracht wird.

9. Optisches System nach einem der Ansprüche 1 bis 8, das eine mechanische Ausrichtungsvorrichtung umfasst, zum Ausrichten der relativen Positionen der Markiervorrichtung, des optischen Systems (WAO) und des Bildsensors (2), und/oder zum Ausrichten der relativen Position des optischen Systems bezogen auf den Bildsensor in einer Ebene parallel zu der des Bildsensors, und/oder zum Ausrichten der Winkellage des optischen Systems um die Achse (O) des optischen Systems bezogen auf den Bildsensor.

10. Optisches System nach einem der Ansprüche 1 bis 9, wobei mindestens eine Markierung (10d, 10e) durch die Markiervorrichtung im optischen System durch eine Oberfläche der Frontlinse (1), die nicht nützlich zur Projektion des Bildes (PI) der Szene auf den Bildsensor (2) ist, eingefügt wird, wobei die Markierung von außerhalb des optischen Systems durch die Frontallinse sichtbar ist und einer Lichtquelle (11) zugeordnet werden kann, die genügend Licht durch die Frontlinse nach außen emittieren kann, um die ganze oder einen Teil der vom optischen System beobachteten Szene zu beleuchten.

11. Verfahren zur Charakterisierung des Objektivs eines optischen Systems (WAO), das ein Bild (PI) einer Szene auf einen Bildsensor (2) projiziert,
**dadurch gekennzeichnet, dass** es dem optischen System einem der Ansprüche 1 bis 10 entspricht, wobei das Verfahren die folgenden Schritte umfasst:

- Einfügen im optischen System von mindestens einer Markierung (10a, 10b, 10c), die außerhalb der Szene liegt und die im vom Bildsensor (2) bereitgestellten Bild zur gleichen Zeit wie das Bild der Szene sichtbar ist,
- Suchen mindestens einer Markierung im vom Bildsensor bereitgestellten Bild,
- Ermitteln mindestens einer der gefundenen Markierungen, und
- Charakterisieren des optischen Systems ab der ermittelten Markierung.

12. Verfahren nach Anspruch 11, wobei mindestens einer der Schritte der Suche und der Ermittlung durch einen digitalen Prozess umgesetzt wird.

13. Verfahren nach einem der Ansprüche 11 und 12, wobei der Schritt der Suche einer Marke im Bild die Anwendung einer digitalen Verarbeitung des Schwellenwerts umfasst, um bestimmte Farben des Bildes zu trennen, und/oder um Bildbereiche zu erkennen, die eine einzigartige Besonderheit bei mindestens einer Markierung umfassen, und/oder die Anwendung einer digitalen Verarbeitung zur Wiedererkennung der Form, die die der im Bild entdeckten Formen innewohnenden geometrischen Eigenschaften analysiert, und/oder die erkannten Formen mit einer Referenzform vergleicht.

14. Verfahren nach einem der Ansprüche 11 bis 13, das einen Schritt zur Analyse der Position und/oder der Richtung und/oder der Abmessungen mindestens einer ermittelten Markierung umfasst, um durch Vergleich oder Berechnung die Position und/oder Richtung des auf den Bildsensor (2) projizierten Bildes (PI) der Szene zu bestimmen, und/oder um durch Vergleich oder Berechnung die Kontur des auf den Bildsensor projizierten Bildes der Szene zu bestimmen.

15. Verfahren nach einem der Ansprüche 11 bis 14, das einen Schritt zur Bestimmung der Kontur des auf den Bildsensor (2) projizierten Bildes der Szene durch Anwendung von einer oder mehreren Iterationen von Algorithmen zur Konturerkennung umfasst.

16. Verfahren nach einem der Ansprüche 11 bis 15, das einen Schritt zur Einführung von mindestens einer Markierung (10d, 10e) in dem optischen System umfasst, so dass die Markierung von außerhalb des optischen Systems sichtbar ist, und gegebenenfalls einen Schritt zur Analyse, um ab der Markierung Daten zur Charakterisierung des optischen Systems für einen digitales System zur Bildverarbeitung zu bestimmen.

**Claims**

1. An optical system (WAO) comprising an image sensor (2) and a detachable objective comprising at least one front lens (1) projecting and image (PI) of a scene on the image sensor and a marking device introducing into the optical system at least one mark (10a, 10b, 10c) located outside the scene, allowing to characterize the objective, and which is visible in the image provided by the image sensor (2) at the same time as the image of the scene, the marking device comprising means (21, 25, 36) configured to introduce the mark through a surface of a lens of the objective, the surface being unused for the projection of an image on the image sensor, and/or to introduce the mark near a diaphragm (5) of the objective, and/or to project directly the mark on the image sensor.

2. The optical system according to claim 1, wherein the marking device is configured to project at least one mark on the image sensor (2), outside the projection zone of the image of the scene (PI) on the image sensor.

3. The optical system according to claim 1 or 2, wherein the marking device comprises a light source (22) emitting light which is transmitted or reflected by at least one of the marks, in at least one of the visible spectrum and the non-visible spectrum, toward the image sensor (2).

4. The optical system according to one of claims 1 to 3, wherein the unused surface of the lens is a lateral face (1d) of the front lens (1), the lateral face may or may not be frosted.

5. The optical system according to one of claims 1 to 4, wherein the marking device comprises a light source (22) and a mask (23) forming at least one mark, whereby light rays produced by the light source are introduced into the optical system and reach the image sensor (2), and wherein the marking device comprises between the light source and the mask, a scattering member (24) and/or a light guide (28) and/or a reflecting surface (27) to redirect light coming from the light source toward the mask.

6. The optical system according to one of claims 1 to 5, wherein the marking device comprises a reflecting surface (36) and/or a diffractive element and/or an optical element of positive power (35) such as a positive lens, to direct light rays (37) from at least one of the marks (10b) toward the image sensor (2).

7. The optical system according to one of claims 1 to 6, wherein at least one of the marks is a structured arrangement of geometrical shapes which together form a combination encoding an item of identification information, and/or is associated with characterizing information of optical properties of the optical system, and/or is associated with characterizing information of at least one of the properties and the operating state of a panoramic view system comprising the optical system and eventually a treatment system and/or a visualization system (8) associated to the optical system, and/or is associated to a characterizing information of at least one of a range and a family of optical system.

8. The optical system according to one of claims 1 to 7, wherein at least one of the marks is projected or located onto or near an intermediate image plane (51).

9. The optical system according to one of claims 1 to 8, comprising a mechanical alignment device to adjust relative positions of the marking device, the optical system (WAO) and the image sensor (2), and/or to adjust a relative position of the optical system with respect to the image sensor in a plane parallel to that of the image sensor, and/or to adjust the angular position of the optical system around an optical axis (O) of the optical system, with respect to the image sensor.

10. The optical system according to one of claims 1 to 9, wherein at least one mark (10d, 10e) is introduced by the marking device in the optical system through a surface of the front lens (1), the surface being unused for the projection of the image (PI) of the scene on the image sensor (2), the mark being visible from the outside of the optical system through the front lens and the mark may be associated with a light source (11), which may emit enough light through the front lens toward the outside to illuminate at least part of the scene observed through the optical system.

11. A method of characterizing the objective of an optical system (WAO) projecting an image (PI) of a scene onto an image sensor (2), wherein the optical system is according to one of claims 1 to 10, the method comprising steps of:

- introducing into the optical system at least one mark (10a, 10b, 10c) located outside of the scene, the mark being visible in the image supplied by the image sensor (2) at the same time as the scene,
- searching for at least one mark in the image supplied by the image sensor,
- identifying at least one of the marks found, and
- characterizing the optical system from the identified mark.

12. The method according to claim 11, wherein at least one of the searching and identifying steps is performed by a digital method.

13. The method according to one of claims 11 and 12, wherein the step of searching for a mark in the image includes applying a digital thresholding processing to separate certain colors of the image, and/or identifying image zones having one characteristic specific to at least one mark, and/or applying a digital processing for shape recognition analyzing the intrinsic geometrical characteristics of shapes detected in the image, and/or comparing the shapes detected with a reference shape.

**EP 1 989 582 B1**

**14.** The method according to one of claims 11 to 13, comprising a step of analyzing a position, and/or a direction, and/or dimensions of at least one identified mark to determine, by comparison or calculation, a position and/or a direction of the projected image (PI) of the scene on the image sensor (2), and/or to determine by comparison or calculation, an outline of the projected image of the scene on the image sensor.

**15.** The method according to one of claims 11 to 14, comprising a step of determining an outline of the projected image (PI) of the scene on the image sensor (2) by application of one or more iterations of an outline detection algorithm.

**16.** The method according to one of claims 11 to 15, comprising a step of introducing at least one mark (10d, 10e) in the optical system such that the mark is visible from the outside of the optical system, and possibly a step of analysis to determine, from the mark, data characterizing the optical system for a system of digital image processing.

**17**

**Fig. 1**

**Fig. 2a**

**Fig. 2b**

WAO

**Fig. 3**

**Fig. 4a**

**Fig. 4b**

**Fig. 5**

**Fig. 6**

**Fig. 7a**

**Fig. 7b**

**Fig. 7c**

**Fig. 7D**

image

| | |
|---|---|
| Algorithme de seuillage colorimétrique de l'image pour extraire les formes de mêmes couleur que les marques | S1 |

| | |
|---|---|
| Algorithme de reconnaissance de formes pour éliminer les formes parasites, et garder les marques valides | S2 |

Existe-t-il des marques sur l'image? — S3

Y

| | |
|---|---|
| Lecture des informations données par les marques et reconnaissance du dispositif optique associé | S4 |

| | |
|---|---|
| Si possible fournir : ◦ le type d'optique, et pour la zone de projection panoramique : la forme, la taille, la position, et la position angulaire | S5 |

**Fig. 8**

image

| S11 |
| Prétraitement de l'image pour éliminer les éléments parasitaires à la détection |

Informations
données par
les marques

| S12 |
| Détection de la zone de projection panoramique par la transformée de Hough sur l'image. |

S13

Les résultats sont-ils assez précis ? (détection semi-automatique ou manuelle)

N

Y

| S14 |
| Renvoyer la position, la position angulaire, et la taille de la zone de projection panoramique |

**Fig. 9**

**Fig. 10**

10d

1

1b

1a

1c

O

12

2

11

10e

**RÉFÉRENCES CITÉES DANS LA DESCRIPTION**

**Documents brevets cités dans la description**

- EP 0635966 A
- US 20050183273 A
- US 20030147594 A
- US 20040247120 A
- US 20040144845 A